# EUROPÄISCHE PATENTSCHRIFT

(11) **EP 2 767 194 B1**
(45) Veröffentlichungstag und Bekanntmachung des Hinweises auf die Patenterteilung: **07.08.2019**
(21) Anmeldenummer: 14153091.5
(22) Anmeldetag: 29.01.2014
(51) Int. Cl.: A47G 19/12, C02F 1/00

(54) **Behälterdeckel**
Container lid
Couvercle de récipient

(30) Priorität: 14.02.2013 DE 102013202430
(43) Veröffentlichungstag der Anmeldung: 20.08.2014
(73) Patentinhaber: WMF WÜRTTEMBERGISCHE METALLWARENFABRIK AG, 73309 Geislingen/Steige (DE)
(72) Erfinder: Barth, Peter, 89601 Schelklingen (DE)
(74) Vertreter: BRP Renaud & Partner mbB Rechtsanwälte Patentanwälte Steuerberater

(56) Entgegenhaltungen:
- EP-A1- 2 119 486
- WO-A1-2005/092155
- WO-A1-2008/058632
- WO-A1-2012/089695
- WO-A2-2013/009752
- US-A1- 2007 141 306
- US-A1- 2007 151 979

## Beschreibung

Die vorliegende Erfindung betrifft einen Behälterdeckel mit einer einen Rand aufweisenden Einfüllöffnung gemäß dem Oberbegriff des Anspruchs 1. Die Erfindung betrifft außerdem eine Karaffe mit einem derartigen Behälterdeckel sowie eine Vorrichtung zur Wasserreinigung in einem einen derartigen Behälterdeckel aufweisenden ersten Behälter.

Ein gattungsgemäßer Behälterdeckel ist beispielsweise aus der WO2008/058632, der WO2005/092155 oder der EP 1 727 449 B1 bekannt, wobei dieser Behälterdeckel ein bewegbares Verschlusselement besitzt, welches eine einen ersten Arm und einen zweiten Arm aufweisende Wippe ist, die um eine Schwenkachse schwenkbar am Behälterdeckel gelagert ist. Der erste Arm besitzt dabei eine Verschlussplatte, wogegen der zweite Arm ein Gegengewicht aufweist, welches mit seinem Drehmoment der Verschlussplatte entgegenwirkt. Um die Einfüllöffnung zu verschließen, legt sich das Verschlusselement von unten an einen Rand der Einfüllöffnung an. Selbstverständlich gibt es auch geschlossene Behälterdeckel ohne eigene Einfüllöffnung, wobei in diesen Fällen der gesamte Behälterdeckel zum Befüllen des Behälters vom Behälter abgenommen werden muss. Das Auf- und Absetzen des Behälterdeckels ist dabei jedoch nachteilig, weil dies einerseits Zeit beansprucht und andererseits die Befestigungsmittel einem unnötigen Verschleiß unterliegen.

Aus der DE 214 596 C ist eine Kanne mit einem gattungsgemäßen Behälterdeckel bekannt, wobei jedoch das Verschlusselement an seiner Verschlussplatte eine plane oder konkave Formgebung aufweist. Dies hat zum Nachteil, dass zu Beginn des Eingießvorgangs die Flüssigkeit beim Auftreffen auf die Verschlussplatte derart abgelenkt wird, dass die Flüssigkeit im ungünstigen Fall herausspritzt, bis die Verschlussplatte sich in ihre Öffnungsstellen bewegt hat.

Die vorliegende Erfindung beschäftigt sich daher mit dem Problem, für einen Behälterdeckel der gattungsgemäßen Art eine verbesserte oder zumindest eine alternative Ausführungsform anzugeben, welche die zuvor genannten Nachteile vermeidet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem Behälterdeckel mit einer einen Rand aufweisenden Einfüllöffnung, die ein bewegbares Verschlusselement besitzt, dieses Verschlusselement so auszubilden bzw. anzuordnen, dass es im Schließzustand geneigt angeordnet ist, wodurch einerseits ein sicheres Verschließen des Behälterdeckels und andererseits ein Verhindern des Herausspritzens zu Beginn des Eingießvorgangs erreicht werden kann. Der erfindungsgemäße Behälterdeckel weist dabei in bekannter Weise das Verschlusselement mit einem ersten Arm und einem zweiten Arm auf, die wippenartig um eine Schwenkachse schwenkbar am Behälterdeckel gelagert sind. Der erste Arm weist dabei eine Verschlussplatte auf, wogegen der zweite Arm ein Gegengewicht besitzt. Um nun zuverlässig ein Verschließen der Einfüllöffnung gewährleisten zu können, ist das Drehmoment des zweiten Arms größer als das Drehmoment des ersten Arms, so dass die Verschlussplatte stets gegen den unteren Rand der Einfüllöffnung und damit in ihren Schließzustand vorgespannt ist. Über die geneigte Anordnung des Verschlusselements im Schließzustand wird jedoch gewährleistet, dass nach Abschluss des Einfüllvorgangs sich noch auf der Verschlussplatte befindliche Flüssigkeit ablaufen und in den darunter angeordneten Behälter abtropfen kann. Zugleich wird auch die Spritzneigung deutlich reduziert, da das einzufüllende Medium, beispielsweise Wasser, nicht mehr senkrecht auf die Verschlussplatte trifft, sondern in einem schrägen Winkel und somit nicht zurückspritzt, sondern gegebenenfalls nur an die Wand der Einfüllöffnung abgelenkt wird, von welcher es ebenfalls problemlos nach unten aufgrund der Schwerkraft ablaufen kann. Wie bereits zuvor erwähnt, kann sich dabei das Verschlusselement zum Verschließen der Einfüllöffnung von unten an den Rand der Einfüllöffnung anlegen, wobei selbstverständlich auch eine Ausführungsform denkbar ist, bei welcher das Verschlusselement in die Verschlussöffnung eingreift und beispielsweise über Arretierpins in seiner geneigten Schließlage gehalten wird. Derartige Arretierpins können somit an der Einfüllöffnung nach innen abstehen. Bei dieser Ausführungsform ist eine Außenkontur des Verschlusselements bzw. der Verschlussplatte an eine Innenkontur der Einfüllöffnung angepasst, so dass diese Im Schließzustand zumindest teilweise in die Einfüllöffnung eingreift.

Zweckmäßig ist der Rand der Einfüllöffnung, beispielsweise in der Art einer Kanüle, geneigt. Hierbei ist denkbar, dass sich die Verschlussplatte des Verschlusselements im Schließzustand von unten an den Rand der Einfüllöffnung anlegt, wobei in diesem Fall die gelenkige Anbindung der Wippe mit dem ersten und zweiten Arm vorzugsweise an der höchsten Stelle des geneigten Randes angeordnet ist.

Bei einer vorteilhaften Weiterbildung der erfindungsgemäßen Lösung weist die Verschlussplatte zumindest an ihrer Oberseite eine einen Lotuseffekt aufweisende Beschichtung auf. Hierdurch wird die Benetzbarkeit der Verschlussplatte auf ihrer Oberseite deutlich reduziert oder bestenfalls sogar eliminiert, so dass insbesondere auch gesüßte Getränke keine Insekten anziehenden Anhaftungen beim Anfüllen in den Behälter hinterlassen und zudem aufgrund der schrägen Verschlusslage der Verschlussplatte leicht abfließen. Selbstverständlich kann die Verschlussplatte auch ringsum einen derartigen Lotuseffekt besitzen, beispielsweise eine entsprechende Beschichtung.

Bei einer vorteilhaften Weiterbildung der erfindungsgemäßen Lösung ist am Rand und/oder am Verschlusselement ein Dichtelement angeordnet. Ein derartiges Dichtelement kann beispielsweise in der Art eines Dichtrings und damit einerseits effektiv und andererseits kostengünstig ausgebildet sein. Ein derartiges Dichtelement gewährleistet in Verbindung mit der Verschlussplatte bzw. dem Rand der Einfüllöffnung ein dichtes, vorzugsweise sogar luftdichtes, Verschließen der Einfüllöffnung, so dass insbesondere auch verderbliche Getränke, wie beispielsweise Milch, in dem Behälter gelagert werden können.

Die Erfindung beruht weiter auf dem allgemeinen Gedanken, eine Karaffe, insbesondere eine Wasserkaraffe, mit einem derartigen Behälterdeckel auszubilden, so dass diese beispielsweise unter einem Wasserhahn einfach befüllt und das eingefüllte Wasser langfristig hygienisch bereitgestellt werden kann. Ebenso kann der erfindungsgemäße Behälterdeckel bei einer Vorrichtung zur Wasserreinigung eingesetzt werden, wobei der Behälterdeckel in diesem Fall auf einem ersten Behälter aufgesetzt wird. Auf dem Behälterdeckel kann nun ein zweiter Behälter aufgesetzt werden, der bodenseitig einen Filter und ein Ventil aufweist, welches im geschlossenen Zustand den zweiten Behälter abdichtet. Der erste Behälter öffnet bei aufgesetztem zweiten Behälter das Ventil am zweiten Behälter und ermöglicht dadurch ein Austreten des im zweiten Behälter gespeicherten Wassers durch das Filter und die Einfüllöffnung in dem ersten Behälter. Wird der zweite Behälter wieder abgenommen, so kann nun das gefilterte Wasser im ersten Behälter angeboten werden, wobei das Verschlusselement den Behälter dicht abschließt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch einen erfindungsgemäßen Behälterdeckel im Bereich einer Einfüllöffnung,
- Fig. 2: eine erfindungsgemäße Vorrichtung zur Wasserreinigung mit einem derartigen erfindungsgemäßen Behälterdeckel,
- Fig. 3: eine Darstellung wie in Fig. 2, jedoch mit aufgesetztem zweitem Behälter.

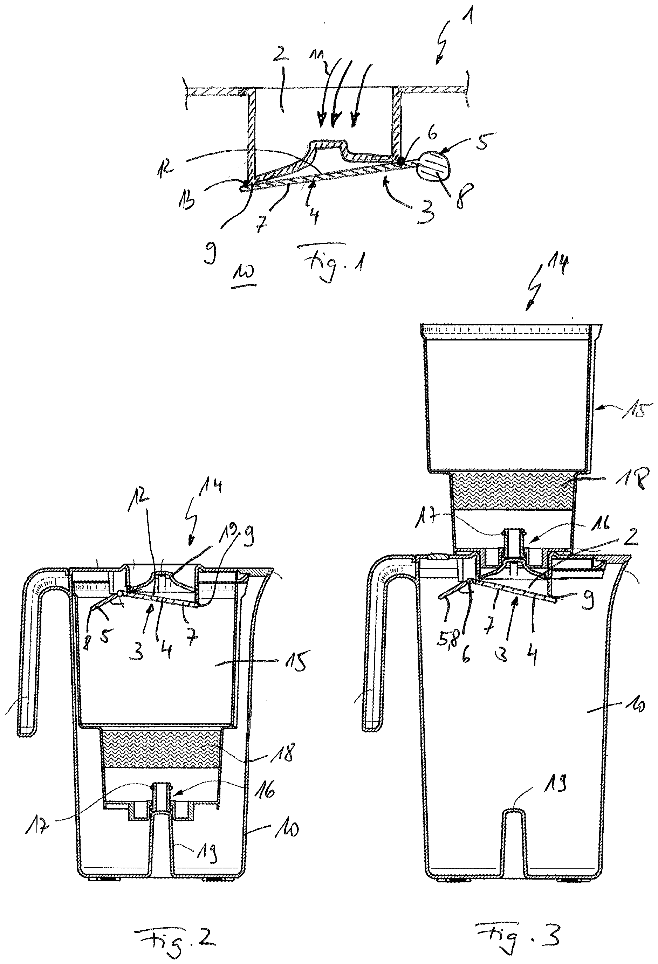

Entsprechend der Figur 1, weist ein erfindungsgemäßer Behälterdeckel 1, der lediglich im Bereich einer Einfüllöffnung 2 dargestellt ist, ein bewegbares Verschlusselement 3 auf, welches einen ersten Arm 4 sowie einen zweiten Arm 5 besitzt und um eine Schwenkachse 6 in der Art einer Wippe schwenkbar am Behälterdeckel 1 gelagert ist. Die Schwenkachse verläuft dabei in den gezeigten Ausführungsformen gemäß den Figuren 1 bis 3 senkrecht zur Bildebene. Am ersten Arm 4 des Verschlusselements 3 ist darüber hinaus eine Verschlussplatte 7 und am zweiten Arm 5 ein Gegengewicht 8 angeordnet. Das Gegengewicht 8 ist dabei so schwer, dass das Drehmoment des zweiten Arms 5 größer ist als das Drehmoment des ersten Arms 4, so dass die Verschlussplatte 4 stets gegen einen Rand 9 der Einfüllöffnung 2 gedrückt wird. Im gezeigten Ausführungsbeispiel legt sich das Verschlusselement 3 zum Verschließen der Einfüllöffnung 2 von unten an den Rand 9 der Einfüllöffnung 2 an. Rein theoretisch ist es aber selbstverständlich auch denkbar, dass die Verschlussplatte 4 komplementär zu einer Innenausnehmung der Einfüllöffnung 2 ausgebildet ist, so dass die Verschlussplatte 4 teilweise in die Einfüllöffnung 2 eingreift. Erfindungsgemäß ist nun das Verschlusselement 3 im Schließzustand geneigt, das heißt zu einer Horizontalen geneigt. Dies bietet den großen Vorteil, dass sich auf der Verschlussplatte 4 sammelnde Flüssigkeit einfach nach unten in einen Behälter 10 abfließen kann. Darüber hinaus kann durch die Schrägstellung bzw. Neigung der Verschlussplatte 4, das heißt des Verschlusselements 3, eine Spritzneigung reduziert werden, da ein auf die Verschlussplatte 4 treffender Flüssigkeitsstrahl 11 nicht mehr senkrecht auf die Verschlussplatte 4 auftritt, sondern schräg dazu und deshalb nicht mehr nach oben aus der Einfüllöffnung 2 herausspritzt, sondern im schlimmsten Fall noch gegen die Wandung der Einfallöffnung 2 spritzt.

Betrachtet man die Figuren 1 bis 3, so kann man erkennen, dass der Rand 9 der Einfüllöffnung 2 geneigt ist und sich die Verschlussplatte 4 im Schließzustand dichtend von unten an den Rand 9 der Einfüllöffnung 2 anlegt. Ist die Verschlussplatte 4 derart ausgebildet, dass sie zum Teil in die Einfüllöffnung 2 einragt, so wären an einem Innenumfang der Einfüllöffnung 2 Arretierelemente angeordnet, die die Verschlussplatte 4 in ihrer Schließstellung in einer Schräge halten würden. Die Verschlussplatte 4 ist darüber hinaus eben ausgebildet und kann zumindest an ihrer Oberseite eine einen Lotuseffekt aufweisende Beschichtung 12 besitzen, wodurch die Benetzbarkeit der Oberfläche der Verschlussplatte 4 reduziert oder sogar verhindert werden kann. Dies bietet den besonderen Vorteil, dass sich auch bei schräg stehender Verschlussplatte 4 keine Flüssigkeit, beispielsweise in Form von Tröpfchen, an der Oberseite der Verschlussplatte 4 hält und, sofern es sich um süße Flüssigkeit handelt, beispielsweise Insekten anlockt.

Um die Dichtwirkung des Verschlusselements 3 steigern zu können, kann am Rand 9 und/oder am Verschlusselement 3, insbesondere im Bereich der Verschlussplatte 4 ein Dichtelement 13 angeordnet sein. Der erste Arm 4 und der zweite Arm 5 bilden eine Art Wippe, die gemäß den Figuren 1 bis 3 an der jeweils höchsten Stelle des geneigten Randes 9 der Einfüllöffnung 4 gelagert ist. Im Schließzustand ist das Verschlusselement 3 um ca. 5° gegen die Horizontale geneigt und gewährleistet dadurch stets ein zuverlässiges Abfließen von darauf auftreffender Flüssigkeit 11.

Der Behälterdeckel 1 mit dem erfindungsgemäßen Verschlusselement 3 und der erfindungsgemäßen Einfüllöffnung 2 kann an jeglicher Art von Behältern 10 angeordnet werden, insbesondere an Karaffen, beispielsweise an Wasserkaraffen.

Der erfindungsgemäße Behälterdeckel 1 kann auch an einer Vorrichtung 14 (vergleiche Figuren 2 und 3) zur Wasserreinigung angeordnet werden, die einen ersten Behälter 10 mit dem erfindungsgemäßen Behälterdeckel 1 sowie einen darin einsetzbaren (vergleiche Figur 2) und/oder darauf aufsetzbaren (vergleiche Figur 3) zweiten Behälter 15 umfasst. Der zweite Behälter 15 weist bodenseitig ein Ventil 16 mit einem verstellbaren Ventilkörper 17 auf, wobei das Ventil 16 im geschlossenen Zustand den zweiten Behälter 15 abdichtet. Im Bodenbereich des zweiten Behälters 15 ist darüber hinaus ein Filter 18 angeordnet, so dass das zunächst im zweiten Behälter 15 gespeicherte Wasser bei Öffnen des Ventils 16 durch das Filter 18 fließt und dort gereinigt wird. Der erste Behälter 10 besitzt sowohl bodenseitig als auch im Bereich der Einfüllöffnung 2 ein Steuerelement 19, welches gemäß der Figur 2 bei eingesetztem zweiten Behälter 15 das Ventil 16 öffnet, indem es den Ventilkörper 17 nach oben drückt. In ähnlicher Weise funktioniert auch das im Behälterdeckel 1 vorgesehene Steuerelement 19, so dass bei einem Aufsetzen des zweiten Behälters 15 auf den ersten Behälter 10 das Steuerelement 19 im Behälterdeckel 1 den Ventilkörper 17 nach oben drückt und damit das Ventil 16 öffnet. Generell kann dabei der Behälterdeckel 1 am ersten Behälter 10 angeordnet sein, wie dies gemäß der Figur 3 dargestellt ist oder aber am zweiten Behälter 15, wie dies gemäß der Figur 2 dargestellt ist.

Generell bietet der erfindungsgemäße Behälterdeckel 1 den großen Vorteil, dass durch das schräg stehende Verschlusselement 3 ein Zurückspritzen von in die Einfüllöffnung 2 eingefüllter Flüssigkeit nicht zu befürchten ist und zugleich sich auf dem Verschlusselement 3 befindliche Flüssigkeit aufgrund der Schrägstellung nach unten in den Behälter 10 bzw. 15 abfließt.

## Patentansprüche

1. Behälterdeckel (1) mit einer Einfüllöffnung (2), die ein bewegbares Verschlusselement (3) besitzt, wobei
- das Verschlusselement (3) eine einen ersten Arm (4) und einen zweiten Arm (5) aufweisende Wippe ist, die um eine Schwenkachse (6) schwenkbar am Behälterdeckel (1) gelagert ist,
- der erste Arm (4) eine Verschlussplatte (7) und der zweite Arm (5) ein Gegengewicht (8) aufweisen,
- das Drehmoment des zweiten Arms (5) größer ist als das Drehmoment des ersten Arms (4),
**dadurch gekennzeichnet,**
- **dass** das Verschlusselement (3) im Schließzustand geneigt ist,
- **dass** ein Rand (9) der Einfüllöffnung (2) geneigt ist,
- **dass** das Verschlusselement (3) eine ebene Verschlussplatte (7) aufweist, die sich im Schließzustand von unten an den Rand (9) der Einfüllöffnung (2) anlegt.

2. Behälterdeckel nach Anspruch 1,
**dadurch gekennzeichnet,**
**dass** die Verschlussplatte (7) zumindest an ihrer Oberseite eine einen Lotuseffekt aufweisende Beschichtung (12) aufweist.

3. Behälterdeckel nach Anspruch 1 oder 2,
**dadurch gekennzeichnet,**
**dass** am Rand (9) und/oder am Verschlusselement (3) ein Dichtelement (13) angeordnet ist.

4. Behälterdeckel nach einem der Ansprüche 1 bis 3,
**dadurch gekennzeichnet,**
**dass** die Wippe an der höchsten Stelle des geneigten Randes (9) der Einfüllöffnung (9) gelagert ist.

5. Behälterdeckel nach einem der Ansprüche 1 bis 4,
**dadurch gekennzeichnet,**
**dass** das Verschlusselement (3) im Schließzustand um ca. 5°gegen die Horizontale geneigt ist.

6. Karaffe, insbesondere eine Wasserkaraffe, mit einem Behälterdeckel (1) nach einem der Ansprüche 1 bis 5.

7. Vorrichtung (14) zur Wasserreinigung mit einem ersten Behälter (10) mit einem Behälterdeckel (1) nach einem der Ansprüche 1 bis 5, sowie mit einem darauf aufsetzbaren oder darin einsetzbaren zweiten Behälter (15), der bodenseitig ein Filter (18) und ein Ventil (16) aufweist, welches in geschlossenem Zustand den zweiten Behälter (15) abdichtet, wobei der erste Behälter (10) bei auf-/eingesetztem zweiten Behälter (15) das Ventil (16) desselben öffnet und dadurch ein Austreten des im zweiten Behälter (15) gespeicherten Wassers durch das Filter (18) in den ersten Behälter (10) ermöglicht.

## Claims

1. Container lid (1) having a filling opening (2) which has a movable closing element (3), wherein
- the closing element (3) is a rocker having a first arm (4) and a second arm (5), which rocker is supported about a pivot axis (6) pivotable on the container lid (1),
- the first arm (4) has a closing plate (7) and the second arm (5) has a counterweight (8),
- the torque of the second arm (5) is greater than the torque of the first arm (4),
**characterised in**
- **that** the closing element (3) is inclined in a closed condition,
- **that** an edge (9) of the filling opening (2) is inclined,
- **that** the closing element (3) has a flat closing plate (7), which in the closed condition abuts from below on the edge (9) of the filling opening (2).

2. Container lid according to claim 1,
**characterised in**
**that** the closing plate (7) has at least at its top side a coating (12) having a lotus effect.

3. Container lid according to claim 1 or 2,
**characterised in**
**that** on the edge (9) and/or on the closing element (3) is disposed a seal element (13).

4. Container lid according to any of claims 1 to 3,
**characterised in**
**that** the rocker is supported on the highest position of the inclined edge (9) of the filling opening (9)

5. Container lid according to any of claims 1 to 4,
**characterised in**
**that** the closing element (3) in the closed condition is inclined by approximately 5° to the horizontal.

6. Carafe, in particular a water carafe, having a container lid (1) according to any of claims 1 to 5.

7. Device (14) for water purification having a first container (10) having a container lid (1) according to any of claims 1 to 5, and having a second container (15) which can be set thereon or set therein, which has at the base a filter (18) and a valve (16) which in closed condition seals the second container (15), wherein the first container (10), when the second container (15) is set thereon/therein, opens the valve (16) of the latter and thus facilitates an emergence of the water stored in the second container (15) through the filter (18) into the first container (10).

## Revendications

1. Couvercle de récipient (1) muni d'une ouverture de remplissage (2) comportant un élément de fermeture mobile (3), dans lequel
- l'élément de fermeture (3) est une bascule, présentant un premier bras (4) et un second bras (5), installée sur le couvercle de récipient (1) de manière à pouvoir pivoter autour d'un axe de pivotement (6),
- le premier bras (4) présente une plaque de fermeture (7) et le second bras (5) présente un contrepoids (8),
- le couple du second bras (5) est supérieur au couple du premier bras (4), **caractérisé en ce que**
- l'élément de fermeture (3) est incliné à l'état fermé,
- un bord (9) de l'ouverture de remplissage (2) est incliné,
- l'élément de fermeture (3) présente une plaque de fermeture plate (7), qui à l'état fermé s'appuie par en-dessous contre le bord (9) de l'ouverture de remplissage (2).

2. Couvercle de récipient selon la revendication 1,
**caractérisé en ce que**
la plaque de fermeture (7) présente un revêtement (12) à effet lotus au moins sur sa face supérieure.

3. Couvercle de récipient selon la revendication 1 ou 2,
**caractérisé en ce que**
un élément d'étanchéité (13) est agencé au niveau du bord (9) et/ou de l'élément de fermeture (3).

4. Couvercle de récipient selon l'une quelconque des revendications 1 à 3,
**caractérisé en ce que**
la bascule est installée au niveau du point le plus haut du bord incliné (9) de l'ouverture de remplissage (9).

5. Couvercle de récipient selon l'une quelconque des revendications 1 à 4,
**caractérisé en ce que**
l'élément de fermeture (3) à l'état fermé est incliné d'environ 5° par rapport à l'horizontale.

6. Pichet, en particulier pichet à eau, muni d'un couvercle de récipient (1) selon l'une quelconque des revendications 1 à 5.

7. Dispositif (14) de purification d'eau comprenant un premier récipient (10) muni d'un couvercle de récipient (1) selon l'une quelconque des revendications 1 à 5, et comprenant un second récipient (15) pouvant être posé sur ledit premier récipient ou être inséré dans celui-ci et présentant du côté de son fond un filtre (18) et un clapet (16) qui à l'état fermé obture de manière étanche le second récipient (15), dans lequel le premier récipient (10) ouvre le clapet (16) du second récipient (15) lorsque celui-ci est posé/inséré, et permet ainsi à l'eau stockée dans le second récipient (15) de s'écouler à travers le filtre (18) dans le premier récipient (10).
